(19) **Europäisches Patentamt / European Patent Office / Office européen des brevets**

(11) **EP 3 314 753 B1**

(12) **FASCICULE DE BREVET EUROPEEN**

(45) Date de publication et mention de la délivrance du brevet:
**23.09.2020 Bulletin 2020/39**

(21) Numéro de dépôt: **16734311.0**

(22) Date de dépôt: **29.06.2016**

(51) Int Cl.:
***H02S 50/15*** (2014.01)

(86) Numéro de dépôt international:
**PCT/EP2016/065194**

(87) Numéro de publication internationale:
**WO 2017/001512 (05.01.2017 Gazette 2017/01)**

(54) **PROCEDE DE CONTROLE DE LA QUALITE D'UN DISPOSITIF PHOTOVOLTAÏQUE, ET DISPOSITIF DE CONTROLE ASSOCIE**

VERFAHREN ZUR QUALITÄTSKONTROLLE EINES PHOTOVOLTAIKMODULS UND ZUGEHÖRIGE INSPEKTIONSVORRICHTUNG

METHOD FOR CONTROLLING THE QUALITY OF A PHOTOVOLTAIC DEVICE, AND ASSOCIATED INSPECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2015 FR 1556031**

(43) Date de publication de la demande:
**02.05.2018 Bulletin 2018/18**

(73) Titulaire: **Commissariat à l'Énergie Atomique et aux Énergies Alternatives
75015 Paris (FR)**

(72) Inventeurs:
• **DOMINGUEZ, Cesar
28017 Madrid (ES)**
• **GARCIA-LINARES, Pablo
73000 Chambery (FR)**

(74) Mandataire: **Novaimo
Europa 1
362, avenue Marie Curie
Archamps Technopole
74166 Saint Julien-en-Genevois Cedex (FR)**

(56) Documents cités:
**EP-A2- 2 421 052      WO-A1-2014/161983
JP-A- 2008 026 113      US-A1- 2011 255 772**

• **CLAUS G ZIMMERMANN: "Performance Mapping of Multijunction Solar Cells Based on Electroluminescence", IEEE ELECTRON DEVICE LETTERS, IEEE SERVICE CENTER, NEW YORK, NY, US, vol. 30, no. 8, 1 août 2009 (2009-08-01), pages 825-827, XP011263984, ISSN: 0741-3106**

## Description

L'invention concerne un procédé et un système de contrôle de la qualité d'un dispositif photovoltaïque comprenant une cellule photovoltaïque assemblée à un substrat par l'intermédiaire d'une interface d'assemblage. Le document EP 2 421 052 A décrit un procédé pour contrôler un dispositif photovoltaïque.

Une cellule photovoltaïque, soumise à des rayonnements lumineux tels que ceux du Soleil, est destinée à produire de l'électricité. Elle génère un courant électrique continu, proportionnel à la puissance lumineuse incidente, et délivre une tension continue. La cellule photovoltaïque comprend un ou plusieurs semi-conducteurs, par exemple à base de silicium, de germanium, de séléniure de cuivre, de tellurure de cadmium, etc... Elle se présente généralement sous la forme d'une plaque de faible épaisseur et de quelques millimètres à plusieurs centimètres de côté.

Plusieurs cellules peuvent être réunies dans un récepteur, module ou panneau solaire photovoltaïque, et assemblées sur un substrat. Pour certaines applications, notamment dans le domaine du photovoltaïque à concentration (connu sous le sigle CPV), la liaison entre les cellules photovoltaïques et le substrat peut être réalisée par une brasure métallique ou une résine époxy.

Une cellule photovoltaïque ne convertit qu'une partie de la lumière incidente, entre 10 et 46% de celle-ci, selon la technologie utilisée. L'excédent d'énergie lumineuse, non converti en électricité, est transformé en chaleur et conduit à un échauffement de la cellule. Pour éviter une surchauffe de celle-ci, le substrat est généralement assemblé à un dissipateur de chaleur. La cellule est montée au sommet d'une chaîne de dissipation thermique comprenant l'interface d'assemblage, le substrat et généralement un dissipateur supplémentaire dans les systèmes à concentration. Cette chaîne thermique est destinée à dissiper la chaleur produite par l'énergie lumineuse non convertie en électricité.

L'interface d'assemblage entre la cellule photovoltaïque et le substrat est une zone particulièrement critique de cette chaîne de dissipation thermique. En effet, lors de la conception de cette interface, par fusion de la brasure pour reprendre l'exemple précité, ou par solidification de la résine, des défauts tels que des trous ou bulles d'air, couramment appelés « voids » en l'anglais, peuvent se former. L'air contenu dans ces défauts a un effet isolant. Il en résulte une rupture de la cohésion thermique et mécanique à l'endroit où l'air est emprisonné, ce qui diminue l'efficacité de la chaîne thermique et, à terme, conduit à des défaillances de la cellule, voire une destruction de celle-ci.

Il se peut également qu'un corps étranger s'incorpore dans l'interface d'assemblage, lors de la réalisation de celle-ci. Si ce corps a une faible conductivité thermique, il peut nuire à l'efficacité de la chaîne de dissipation thermique.

Lors du fonctionnement de la cellule, ces défauts dits « thermiques » ou plutôt liées à la dissipation thermique (trous d'air de type « void » ou corps étrangers) créent des zones de surchauffe locale. Cela peut diminuer de façon significative l'efficacité de la chaîne de dissipation thermique et induire des stress thermiques ou d'autres effets dangereux comme des emballements thermiques, voire provoquer une destruction de la cellule à moyen ou long terme.

Il est donc important d'effectuer, en fin de processus de fabrication du récepteur, module ou panneau photovoltaïque, un contrôle de la qualité de l'interface d'assemblage cellule/substrat afin de détecter d'éventuels défauts de dissipation thermique notamment liés à la présence de trous d'air et/ou de corps étrangers.

Il existe diverses techniques de détection de sources de défauts de dissipation thermique dans l'interface d'assemblage entre cellule et substrat

Une première technique est la tomographie par rayons X. Elle donne d'excellents résultats mais nécessite un appareillage lourd et coûteux. Par ailleurs, la préparation des échantillons pour la thermographie par rayons X peut imposer des opérations destructives sur l'échantillon.

Une deuxième technique est l'imagerie par Infra-Rouge. Elle fournit une résolution spatiale faible et nécessite également un équipement coûteux. L'imagerie infra-rouge requiert un temps de stabilisation thermique important et s'avère donc peu compatible avec les contraintes d'une fabrication industrielle.

Une troisième technique, plus récente, est basée sur l'injection dans la cellule d'un courant fort permettant de visualiser les défauts d'assemblage par électroluminescence. Elle comprend la mise en œuvre des étapes suivantes :

- injection d'un courant électrique fort, supérieur à un seuil prédéfini spécifiquement calibré pour permettre la détection de défauts d'assemblage à travers la cellule photovoltaïque, par exemple égal à 1 A par centimètre carré de surface de cellule (soit 1 A·cm$^{-2}$);
- acquisition d'une image d'électroluminescence des radiations lumineuses émises par la cellule photovoltaïque sous l'effet du courant injecté ;
- détection d'au moins un défaut dans l'interface d'assemblage à partir de l'image d'électroluminescence acquise.

Lorsqu'un courant est injecté à travers une cellule photovoltaïque, celle-ci émet de la lumière, à une ou plusieurs longueurs d'onde spécifiques. Il s'agit là d'un phénomène d'électroluminescence qui résulte de la recombinaison radiative d'électrons injectés et de trous électroniques dans la matière, produisant des photons. Cependant, seule une partie des électrons injectés est convertie en photons. L'excédent d'électrons non convertis en photons se recombine de façon non radiative, ce qui provoque un échauffement de la cellule parfois très important.

Selon la troisième technique, lorsque le courant injecté dans la cellule est suffisamment fort, on peut observer une augmentation de l'intensité des radiations lumineuses émises par la cellule, par électroluminescence, à l'endroit situé au droit du défaut de dissipation thermique dans l'interface d'assemblage. Cet effet est produit à cause de l'évolution thermique de la caractéristique courant-tension dans la région du point chaud, qui fait monter le courant dissipée pour une tension donnée Un défaut de dissipation thermique, tel qu'un trou d'air ou « void », dans la zone d'assemblage entre la cellule et le substrat a un impact sur le comportement électroluminescent de la cellule à l'endroit situé au droit de ce défaut. On peut donc ainsi détecter et positionner des défauts de type thermique, en particulier des trous d'air ou « voids » mais aussi certains corps étrangers, dans l'interface d'assemblage, par injection d'un courant électrique fort adapté.

Cette troisième technique de détection de défauts présente toutefois certaines limites. Il existe en effet un risque de détériorer la cellule et/ou l'interface d'assemblage du fait de l'utilisation d'un courant fort. En outre, avec cette technique, il est difficile de discriminer de façon satisfaisante les défauts dans l'interface d'assemblage et les effets de bord ou « crowding effect » qui sont liés à un densité d'électrons (et donc de photons produits) plus importante au voisinage des bus-barres disposés aux bords de la cellule et via lesquels le courant est injecté, voire même certains défauts cristallins de la cellule elle-même.

La présente invention vient améliorer la situation.

A cet effet, l'invention concerne un procédé de contrôle de la qualité d'un dispositif photovoltaïque comprenant une cellule photovoltaïque assemblée à un substrat par l'intermédiaire d'une interface d'assemblage, comprenant les étapes suivantes :

- injection d'un courant électrique à travers la cellule photovoltaïque ;
- acquisition d'une première image d'électroluminescence de la cellule sous l'effet du courant injecté ;

caractérisé en ce que la première image d'électroluminescence est acquise durant une phase d'état thermique transitoire de la cellule, et en ce qu'il comprend une étape d'acquisition d'une deuxième image d'électroluminescence de la cellule, décalée dans le temps par rapport à la première image d'électroluminescence, une étape de traitement d'image lors de laquelle on détermine des données relatives à une différence entre les deux images.

Les défauts de dissipation thermique dans l'interface d'assemblage entre la cellule photovoltaïque et le substrat, notamment les trous d'air et/ou certains corps étrangers incorporés, produisent des inhomogénéités thermiques dans la cellule. Localement, à l'endroit d'un défaut de type « void » (ou trou d'air) dans l'interface d'assemblage avec le substrat, la cellule présente localement une zone qui a un comportement thermique différent du reste de la cellule (inhomogénéité thermique). Cette zone particulière chauffe davantage que le reste de la cellule. L'invention tire profit du fait que le comportement thermique de la cellule, et notamment des zones d'inhomogénéité thermique, a une certaine inertie, qui dépend de la conductivité thermique et la capacité calorifique volumique de la cellule, la pâte à souder et le substrat : son évolution thermique n'est pas instantanée suite à l'injection d'un courant électrique. A contrario, le comportement électrique de la cellule est instantané ou quasi-instantané, c'est-à-dire de l'ordre d'une ou plusieurs nanosecondes ou microseconde (la stabilisation thermique étant de l'ordre d'une ou plusieurs millisecondes ou secondes), une fois qu'un courant électrique est injecté à travers elle. Grâce à cette différence entre le comportement thermique et le comportement électrique de la cellule soumise à un courant électrique, on peut, à partir de deux images d'électroluminescence décalées dans le temps, effacer les effets de bord liés au comportement électrique de la cellule et rendre mieux visibles les défauts liées à la dissipation thermique.

Avantageusement, il comprend une étape de détection d'au moins un défaut dans l'interface d'assemblage par analyse des données relatives à la différence entre les deux images.

Dans un premier mode de réalisation, la deuxième image est acquise durant la phase d'état thermique transitoire.

Dans un deuxième mode de réalisation, la deuxième image est acquise durant une phase d'état thermique stable de la cellule, postérieure à la phase d'état thermique transitoire.

Avantageusement, il comprend une étape de soustraction entre les deux images.

Avantageusement encore, on injecte à travers la cellule photovoltaïque un courant électrique de contrôle initialement nul qui augmente jusqu'à une valeur de consigne prédéfinie durant une phase initiale, puis demeure stable et égal à ladite valeur de consigne.

La durée de la phase transitoire d'augmentation du courant est généralement de l'ordre de quelques $\mu$s et avantageusement inférieure à 1 ms.

Avantageusement, la première image est acquise après ladite phase initiale d'augmentation du courant, c'est-à-dire alors que le courant électrique de contrôle est stabilisé à ladite valeur de consigne.

Le décalage temporel entre les deux images peut être compris entre 1 $\mu$s et 100 ms.

L'invention concerne aussi un dispositif de contrôle de la qualité d'un dispositif photovoltaïque comme décrit dans la revendication 9.

L'invention sera mieux comprise à l'aide de la description suivante d'un mode de réalisation particulier du procédé de contrôle de la qualité d'un dispositif photovoltaïque comprenant une cellule photovoltaïque assemblée à un substrat par l'intermédiaire d'une interface d'assemblage et d'un dispositif de contrôle correspondant, en référence aux dessins annexés sur lesquels :

- la figure 1 illustre un phénomène d'électroluminescence d'une cellule photovoltaïque triple jonction ;
- la figure 2 représente une cellule photovoltaïque montée sur une chaîne de dissipation thermique, selon un exemple de réalisation particulier ;
- la figure 3 représente un exemple de réalisation d'une installation d'acquisition d'un signal de mesure de radiations lumineuses émises par électroluminescence par une cellule ;
- la figure 4 représente, de façon simplifiée, l'évolution temporelle du courant injecté, de la distribution du courant, de la température dans la cellule, ainsi que les durées entre prises de vue successives;

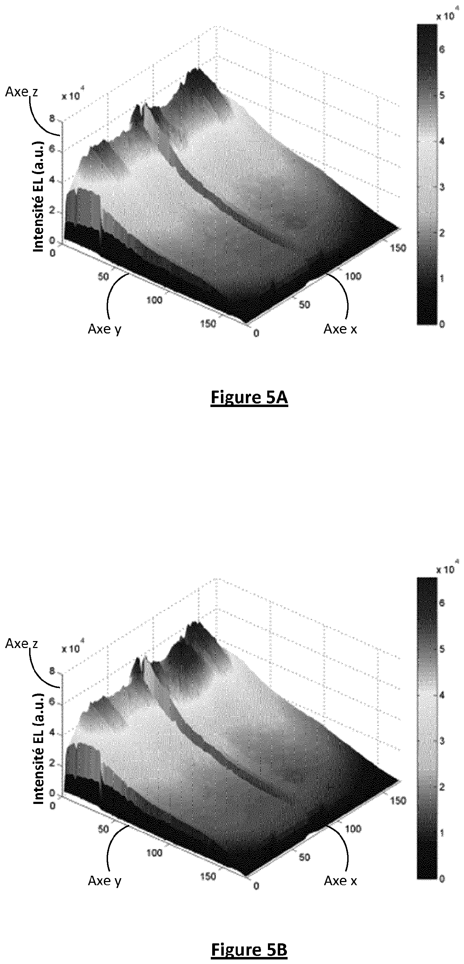

- les figures 5A et 5B représentent deux images d'électroluminescence de la cellule photovoltaïque acquises respectivement pendant une phase d'état thermique transitoire et pendant une phase d'état thermique stabilisé de la cellule ;

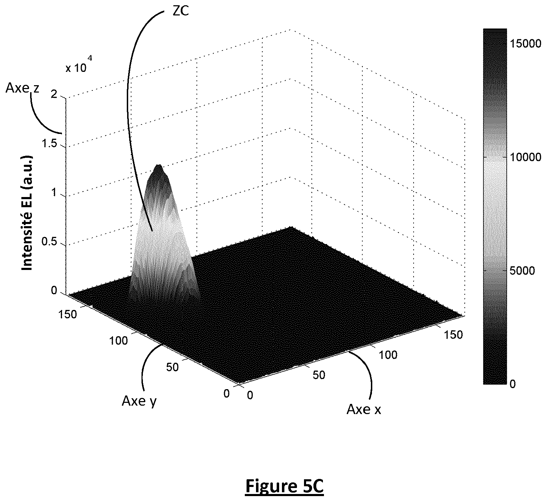

- la figure 5C représente le résultat de la soustraction des images des figures 5A et 5B ;
- les figures 6A à 6E représentent chacune le résultat de la soustraction d'un couple d'images de la cellule photovoltaïque, l'une étant acquise en début de la phase d'état thermique transitoire de la cellule, l'autre étant acquise postérieurement à différents instants selon la figure ;
- la figure 7 représente un organigramme des étapes du procédé de contrôle de qualité selon un mode de réalisation particulier de l'invention ;
- la figure 8 représente un dispositif de contrôle de qualité selon une forme de réalisation particulière de l'invention, apte à mettre en œuvre le procédé de la figure 7.

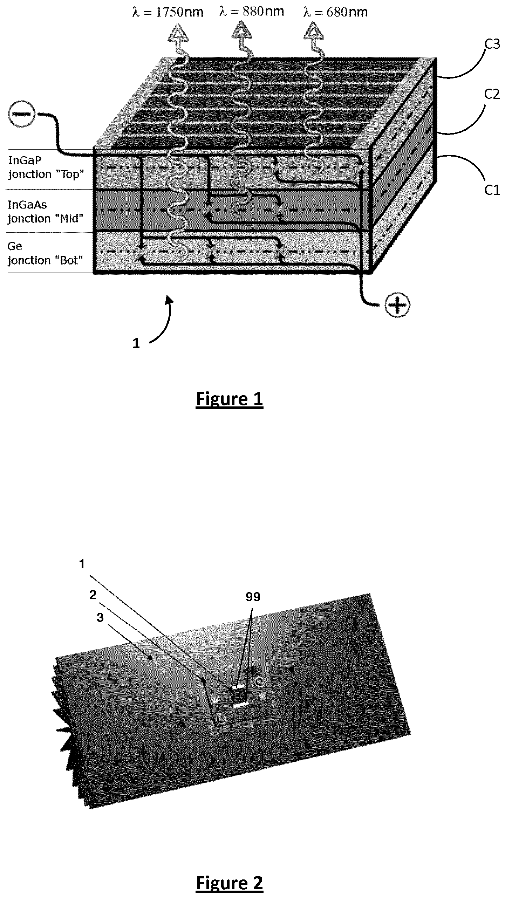

Une cellule photovoltaïque permet de convertir une lumière incidente en électricité, autrement dit de convertir des photons en électrons. A l'inverse, lorsqu'un courant est injecté à travers la cellule, par polarisation de celle-ci, la cellule émet des radiations lumineuses par électroluminescence. Ce phénomène est le résultat de la recombinaison radiative d'une partie des électrons injectés et de trous électroniques dans la matière, ce qui produit des photons. Le phénomène d'électroluminescence est illustré à titre d'exemple sur la figure 1 dans le cas particulier d'une cellule photovoltaïque triple jonction 1. Cette cellule triple jonction 1 comporte trois sous-jonctions superposées, C1, C2 et C3, appelées «Bot » pour la couche basse C1, « Mid » pour la couche intermédiaire C2 et « Top » pour la couche haute C3. Dans l'exemple particulier de la figure 1, les couches C1, C2 et C3 sont constituées des semi-conducteurs Ge, InGaAs et InGaP respectivement (toutes avec le même paramètre de maille). Lorsque la cellule 1 est polarisée, comme représenté par les signes « + » et « - » sur la figure 1, les trois couches C1, C2 et C3 émettent des radiations lumineuses respectivement aux trois longueurs d'onde spécifiques $\lambda_1$=1750 nm, $\lambda_2$=880 nm, $\lambda_3$=680 nm. Ces trois longueurs d'onde $\lambda_1$, $\lambda_2$, $\lambda_3$ caractérisent la cellule 1.

Seule une partie des électrons injectés dans une cellule photovoltaïque produisent des photons par électroluminescence. Les électrons injectés qui ne se recombinent pas de façon radiative produisent un dégagement de chaleur. Pour évacuer cette chaleur, la cellule photovoltaïque est montée sur un module constituant une chaîne de dissipation thermique. Un exemple de réalisation d'une telle chaîne thermique est représenté sur la figure 2. La chaîne thermique représentée comporte :

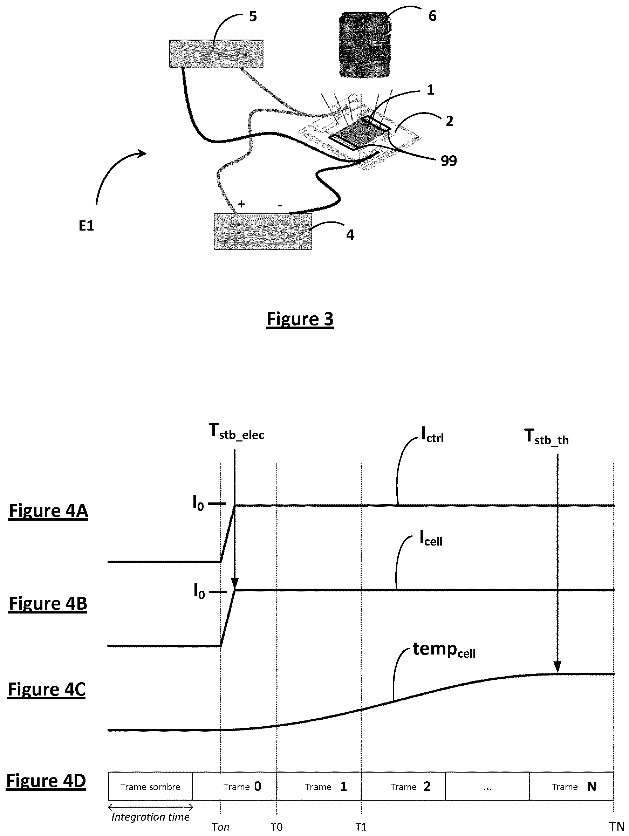

- un substrat 2, sur lequel la cellule 1 est montée par l'intermédiaire d'une interface d'assemblage 99 (représentée schématiquement sur les figures 2 et 3), réalisée ici par brasure,
- un dissipateur thermique 3, sur lequel le substrat 2 est connecté thermiquement.

Le terme « assemblage » désigne la réunion d'entités initialement séparées, en l'espèce le substrat 2 et la cellule 1.

L'interface 99, ou zone, d'assemblage est un élément critique de la chaîne de dissipation thermique. Lors de la réalisation de cette interface 99, ici par fusion de la brasure, des défauts tels que des trous ou lacunes d'air, couramment appelés « voids » selon la terminologie anglaise, sont susceptibles de se former. Il se peut également que, lors de la réalisation de l'interface d'assemblage, un corps étranger s'incorpore dans l'interface. Ce corps est susceptible de dégrader de façon significative l'efficacité de la chaîne thermique si sa conductivité thermique est trop faible. Lors du fonctionnement de la cellule, ces défauts - lacunes (ou « voids ») ou corps étrangers de faible conductivité thermique - induisent une surchauffe locale et, par conséquent, provoquant des contraintes mécaniques.

Le procédé de contrôle de qualité de l'invention permet de détecter les défauts qui sont situés dans l'interface 99, ou zone, d'assemblage entre une cellule photovoltaïque 1 et son substrat 2 et qui diminuent localement la conductivité thermique et, par voie de conséquence, l'efficacité de la dissipation thermique. Il peut être mis en œuvre lors d'une phase de contrôle de qualité d'une cellule photovoltaïque assemblée à son substrat, par exemple en fin de processus de fabrication d'un récepteur, panneau ou autre module photovoltaïque contenant une pluralité de cellules photovoltaïques.

Le procédé est mis en œuvre par un équipement de contrôle de qualité comportant les entités suivantes :

- un dispositif E1 d'acquisition d'images d'électroluminescence représentatives de radiations lumineuses émises par la cellule, par électroluminescence, sous l'effet d'un courant injecté à travers la cellule ;
- un dispositif E2 de traitement d'image et de détection de défauts ;

- un dispositif de commande E3.

Le dispositif d'acquisition E1, dont un exemple de réalisation est représenté sur la figure 3, comporte une source 4 d'alimentation en tension continue, un voltmètre 5 de contrôle de la tension appliquée et un dispositif d'imagerie 6.

La source d'alimentation 4 est destinée à être connectée à des bornes ou « bus bars » (en anglais) de la cellule photovoltaïque et à polariser celle-ci, de manière à injecter un courant à travers la cellule 1. La cellule photovoltaïque 1 possède une caractéristique courant-tension propre, analogue à celle d'une diode. La valeur de la tension appliquée aux bornes de la cellule détermine donc la valeur du courant injecté à travers celle-ci. Le voltmètre 5 est destiné à contrôler la tension appliquée aux bornes de la cellule. Le voltmètre 5 est toutefois facultatif si l'affichage et/ou le réglage des valeurs de tension sur l'alimentation 4 est suffisamment précis. En fonctionnement, sous la commande du dispositif de commande E3, la source 4 applique aux bornes de la cellule à contrôler une tension V adaptée de sorte à injecter un courant de contrôle $I_{ctrl}$ à travers la cellule 1. Dans l'exemple de réalisation décrit ici, le courant de contrôle $I_{ctrl}$ est inférieur à 1 A.cm$^{-2}$, et par exemple égal à environ 0,25 A.cm$^{-2}$. Sur la figure 4, on a représenté l'évolution temporelle du courant $I_c$ injecté dans la cellule 1. Au démarrage, le courant de contrôle $I_{ctrl}$ augmente brutalement de sorte à passer de la valeur nulle ($I_{ctrl} = 0$) à une valeur de consigne souhaitée $I_0$ puis demeure stable à cette valeur de consigne $I_0$. La stabilisation des caractéristiques électriques de la cellule 1, particulièrement des inhomogénéités en tension et courant sur toute sa surface, est quasi-instantanée suite à l'injection du courant de contrôle $I_{ctrl}$. La vitesse de la stabilisation électrique de la cellule, et notamment de ses inhomogénéités, dépend de plusieurs facteurs: de la distribution d'une résistance série à la surface de la cellule (qui dépend elle-même du design de la métallisation et de propriétés physiques des semi-conducteurs), de possibles défauts cristallins de la cellule et du niveau d'injection du courant. La durée de stabilisation électrique de la cellule photovoltaïque (c'est-à-dire la durée nécessaire pour que le comportement électrique de la cellule 1 devienne stable) sous l'hypothèse d'une température stable est donc sensiblement égale à la durée $\tau$ de la phase initiale d'augmentation brutale faisant passer le courant $I_{ctrl}$ de la valeur nulle à la valeur de consigne $I_0$. Cette durée $\tau$ doit être inférieure à la durée de stabilisation thermique de la cellule. Elle est inférieure à 1 ms, avantageusement inférieure à quelques $\mu$s, avantageusement encore inférieure ou égale 1 $\mu$s.

Le dispositif d'imagerie 6 est apte à acquérir des images d'électroluminescence de la cellule, représentatives des radiations lumineuses émises par électroluminescence par la cellule 1, sous l'effet d'un courant injecté. En fonctionnement, le dispositif 6 mesure une grandeur physique, ici l'intensité lumineuse, relative aux radiations émises par la cellule 1. Le dispositif d'imagerie 6 peut être par exemple une caméra (ou un appareil photo) hyperspectrale, munie d'une matrice de capteurs CCD (de l'anglais « *Charge-Coupled Device »,* traduit en français par « Dispositif à Transfert de Charge ») aptes à mesurer un nombre de photons. En variante, il peut s'agir d'une caméra (ou appareil photo) apte à mesurer l'intensité de radiations lumineuses dans une bande spectrale moins étendue, couvrant au moins l'une des longueurs d'onde caractérisant cette cellule. En toute hypothèse, les données de mesure acquises par le dispositif 6 permettent de former une image d'électroluminescence de la cellule 1, par exemple une image 3D (c'est-à-dire à trois dimensions). L'image 3D représente, en deux dimensions (ici abscisse et ordonnée), la surface émettrice de la cellule 1, et, selon une troisième dimension (ici hauteur), l'intensité lumineuse émise par chaque pixel d'image correspond à un élément de surface de la cellule 1. Chaque pixel est caractérisé par une valeur représentative de l'intensité lumineuse des radiations lumineuses détectées. A la place d'une représentation en 3D des radiations lumineuses émises par la cellule 1, on pourrait envisager une représentation, ou image, en 2D (c'est-à-dire en deux dimensions) dans laquelle l'intensité lumineuse associée à un élément de surface ou pixel serait représentée une couleur. En toute hypothèse, chaque pixel de l'image d'électroluminescence de la cellule 1 est associé à une valeur représentative de l'intensité des radiations lumineuses correspondant à un élément de surface correspondant de la cellule 1.

En fonctionnement, en référence à la figure 4D, le dispositif d'imagerie 6 est adapté pour prendre des images avec une fréquence donnée. Dans l'exemple de réalisation décrit, la fréquence de prise d'image est de 60 images par seconde (ou 60 « fps » de l'anglais « frame per seconde »), la durée d'une trame (ou « frame » en anglais) entre deux images successives étant de 20 ms. On note « i » l'indice d'une trame (ou « frame ») et « Ti » l'instant de prise d'image en fin de trame (ou « frame »), i étant initialement égal à 0 au démarrage de l'opération d'acquisition d'images.

Des filtres peuvent être associés au dispositif d'imagerie 6, notamment à la caméra CCD, pour sélectionner dans le signal à large spectre acquis une ou plusieurs bande(s) spectrale(s) étroite(s) calée(s) sur la ou les longueurs d'onde caractérisant la cellule à contrôler. Chaque pixel d'image est ainsi caractérisé par une valeur d'intensité lumineuse correspondant à l'intensité lumineuse des radiations émises aux longueur(s) d'onde filtrées.

Le dispositif E2 est destiné à obtenir par traitement d'image des données relatives à une différence entre deux images d'électroluminescence de la cellule 1 et à détecter un ou plusieurs défauts à partir de ces données. Il comprend :

- un module de traitement d'image 7, apte à faire une soustraction entre deux images d'électroluminesces-

cence, et

- un module de détection 8 apte à détecter un ou plusieurs défauts dans l'interface 99 d'assemblage par analyse des données résultant de la soustraction.

Rappelons qu'une image d'électroluminescence de la cellule photovoltaïque 1 est composée d'un ensemble de pixels et que chaque pixel est associé à une valeur représentative de l'intensité lumineuse des radiations lumineuses émises par une zone correspondante (ou élément de surface) de la cellule photovoltaïque 1. La soustraction entre deux images d'électroluminescence de la cellule 1, notées $IM_p$ et $IM_q$, par exemple « $IM_q-IM_p$ », consiste, pour chaque pixel d'image, à soustraire la valeur d'intensité lumineuse associée à ce pixel dans l'image $IM_p$ à la valeur d'intensité lumineuse associée à ce même pixel dans l'image $IM_q$. Les données résultant de la soustraction de deux images d'électroluminescence $IM_p$ et $IM_q$ peuvent être représentées par une image $IM_{q-p}$ dite « différentielle » de la cellule 1. Le module de détection 8 est destiné à analyser cette image différentielle afin d'y détecter un ou plusieurs éventuel(s) défaut(s) thermique(s) situé(s) dans l'interface 99 d'assemblage entre la cellule 1 et son substrat ou support 2. L'analyse peut consister à détecter un groupe de pixels voisins de l'image différentielle dont les valeurs d'intensité lumineuse associées sont supérieures à un seuil prédéfini TSH_IL. L'analyse permet ainsi de détecter une zone chaude de la cellule 1.

Le dispositif de commande E3 est connecté aux différents éléments du système et destiné à commander le fonctionnement de ces éléments, comme cela sera explicité dans la description du procédé de contrôle de qualité. Il est notamment destiné à commander :

- l'injection d'un courant de contrôle $I_{ctrl}$ à travers la cellule 1 par la source d'alimentation 4 ;
- l'acquisition par le dispositif d'acquisition E1 de deux images d'électroluminescence qui sont décalées dans le temps ;
- le traitement d'image et la détection de défauts par le dispositif de traitement 2 ;

comme cela sera décrit plus loin dans la description du procédé.

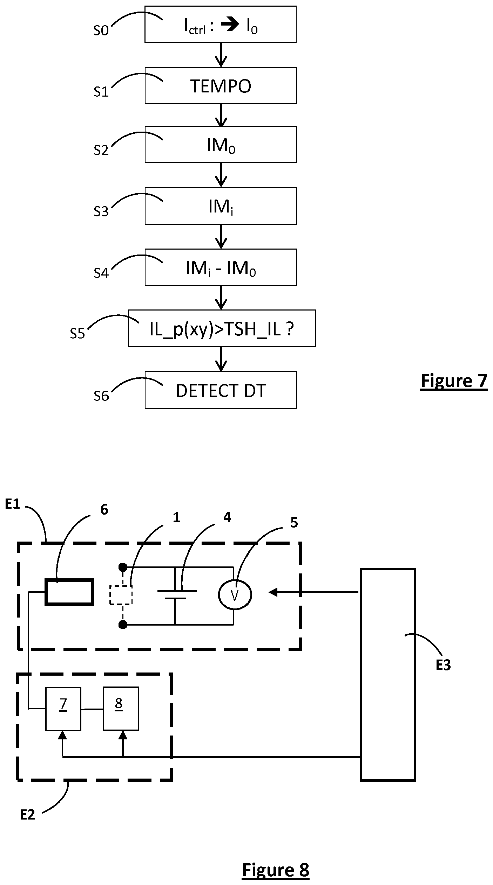

En référence à la figure 7, on va maintenant décrire un mode de réalisation particulier du procédé de contrôle de la qualité du dispositif photovoltaïque comportant la cellule photovoltaïque 1 assemblée au substrat, ou support, 2. Il est exécuté sous contrôle du dispositif de commande E3.

Le procédé comprend une première étape S0 d'injection d'un courant de contrôle $I_{ctrl}$ à travers la cellule 1. L'évolution temporelle du courant $I_{ctrl}$ est représentée sur la figure 4A. Initialement, à l'instant $T_{on}$, le courant $I_{ctrl}$ est nul. Il augmente ensuite, ici brutalement et de façon linéaire, durant une phase initiale d'augmentation de durée $\tau$, jusqu'à atteindre un courant de consigne $I_0$,

puis demeure constant et égal à ce courant de consigne $I_0$ pendant toute l'opération de contrôle de qualité. La durée $\tau$ de la phase initiale d'augmentation du courant est inférieure à une trame entre deux images successives prises par la caméra et inférieure ou égale à la durée de la phase d'état thermique transitoire, elle est par exemple inférieure ou égale, voire très inférieure à 20 ms. La durée $\tau$ de la phase initiale d'augmentation brutale du courant $I_{ctrl}$ est dans l'exemple de réalisation décrit ici de l'ordre de 1 $\mu$s. Le courant injecté à travers la cellule 1 est strictement inférieur à 10 A.cm$^{-2}$, et de façon préférée supérieur à 10 mA.cm$^{-2}$. Le courant de consigne $I_0$ est ici égal à 0,25 A.cm$^{-2}$.

Sur la figure 4B, on a représenté l'évolution du courant $I_{cell}$ qui traverse la cellule 1. Cette évolution du courant $I_{cell}$ est fonction du courant de contrôle injecté $I_{ctrl}$. La distribution de la densité de courant liée à $I_{cell}$ (et la luminescence correspondant) traversant la cellule 1 se stabilise quasi-instantanément lorsque le courant de contrôle $I_{ctrl}$ injecté (figure 4A) atteint sa valeur constante de consigne $I_0$ sous l'hypothèse d'une température stable (ce qui peut être le cas d'une injection de courant faible). Le courant $I_{cell}$, une fois stabilisé, est égal à la valeur de consigne $I_0$.

Sur la figure 4C, on a représenté schématiquement et de façon simplifiée l'évolution temporelle de la température d'une zone de la cellule située à l'endroit d'un défaut de dissipation thermique, par exemple un trou d'air ou « void », dans l'interface 99 d'assemblage. Sensiblement peu après le début de l'injection du courant à travers la cellule 1, la température de cette zone de la cellule augmente lentement, pendant une phase d'état thermique transitoire de la cellule 1, jusqu'à atteindre et se stabiliser à une valeur de température stable. Par définition, on appelle « phase d'état thermique transitoire » de la cellule 1, la période qui suit le début de l'injection d'un courant électrique de contrôle $I_{ctrl}$ stable, égal au courant de consigne $I_0$, et durant laquelle la température de la jonction de la cellule, ou de chaque jonction ou sous-cellule dans le cas d'une cellule multi-jonction, n'est pas encore stabilisée. La température à l'intérieur de la jonction de la cellule peut être estimée à partir de la tension en circuit ouvert de la cellule ou de la température sur la surface de la cellule (car la stabilisation de la jonction de la cellule implique la stabilisation de la température sur la surface de la cellule).

La durée de la phase initiale d'augmentation du courant injecté est ici de l'ordre de 1 $\mu$s. Elle pourrait en variante être plus courte ou plus longue. En toute hypothèse, elle doit être inférieure à la durée de la phase d'état thermique transitoire de la cellule 1.

L'étape S0 est exécutée par la source d'alimentation 4, sous la commande du dispositif de commande E3.

Suite au début de l'injection du courant de contrôle $I_{ctrl}$ à l'instant Ton, le procédé comprend une étape de temporisation S1 pour différer l'étape suivante S2 du procédé, après la phase initiale d'augmentation du courant de contrôle $I_{ctrl}$ et stabilisation du courant $I_{cell}$ traversant la cellule 1.

L'étape suivante S2 est une étape d'acquisition d'une première image d'électroluminescence $IM_0$ de la cellule 1. Elle est exécutée à l'instant TO qui est postérieur au début de la stabilisation du courant traversant la cellule 1 et situé durant la phase d'état thermique transitoire de la cellule 1. Autrement dit, la première image d'électroluminescence $IM_0$ est acquise durant la phase d'état thermique transitoire de la cellule 1. La première image $IM_0$ est aussi acquise alors que le courant électrique de contrôle est stabilisé à sa valeur de consigne.

Dans l'exemple de réalisation particulier décrit ici, le dispositif d'imagerie 6 est adapté pour prendre une image de la cellule toutes les 20ms. La durée d'une trame (ou « frame » en anglais) entre deux images successives est donc ici égale à 20ms.

L'instant TO d'acquisition de la première image $IM_0$ est postérieur à l'instant Ton de début d'injection du courant de contrôle $I_{ctrl}$. Le décalage temporel entre les deux instants Ton et TO est adapté de sorte à ce que la première image d'électroluminescence de la cellule 1 soit acquise après stabilisation électrique de la cellule 1 et pendant la phase d'état thermique transitoire de la cellule 1. Dans l'exemple de réalisation particulier décrit ici, ce décalage temporel est de l'ordre de 15ms. La mise en marche du dispositif d'imagerie 6 et le début Ton d'injection du courant sont coordonnés de manière à obtenir le décalage temporel souhaité entre Ton et T0, comme représenté à titre d'exemple illustratif sur la figure 4D.

Le procédé comprend ensuite une étape S3 d'acquisition d'une deuxième image d'électroluminescence $IM_i$ de la cellule 1 à un instant Ti. Cet instant Ti est ici postérieur à l'instant T0. Autrement dit, i est supérieur ou égal à 1.

Dans un premier mode de réalisation, la deuxième image $IM_i$ est acquise durant la phase d'état thermique transitoire de la cellule ou peu après celle-ci. Par l'expression « peu après », on entend signifier que la deuxième image d'électroluminescence $IM_i$ peut également être acquise à la fin de la trame durant laquelle l'état thermique de la cellule se stabilise. Sur la figure 4D, cette trame de stabilisation thermique est la trame d'indice N. Sur les figures 4C et 4D, la phase d'état thermique transitoire de la cellule 1 démarre durant la première trame (ou « frame ») TO et se termine durant la trame TN. La deuxième image d'électroluminescence $IM_i$ peut être acquise par le dispositif d'imagerie 6 à l'un des instants d'acquisition d'image suivants : T1, T2, T3, ..., TN.

Les étapes S2 et S3 sont exécutées par le dispositif d'imagerie 6, sous contrôle du dispositif de commande E3.

Après acquisition des deux images $IM_0$ et $IM_i$, le procédé passe à une étape de traitement d'image S4. L'étape de traitement d'image S4 vise à évaluer les changements intervenus entre les deux images $IM_0$ et $IM_i$ décalées temporellement. En d'autres termes, l'étape S4 a pour but de déterminer la différence entre les deux images $IM_0$ et $IM_i$. La différence ainsi déterminée permet d'identifier un ou plusieurs éventuel(s) défaut(s) thermique(s) dans l'interface 99 d'assemblage entre la cellule 1 et son substrat 2. Le traitement d'image S4 comprend ici une opération de soustraction des deux images, consistant à soustraire ici la deuxième image $IM_i$ à la première image $IM_0$, autrement dit à calculer $IM_i - IM_0$. On pourrait toutefois faire l'inverse. Pour effectuer cette soustraction, on calcule, pour chaque pixel d'image $p_{xy}$, x et y représentant respectivement l'abscisse et l'ordonnée du pixel dans le plan 2D représentant la surface de la cellule 1, la différence entre l'intensité lumineuse $IL\_IM_i(p_{xy})$ associée à ce pixel $p_{xy}$ dans la deuxième image $IM_i$ et l'intensité lumineuse $IL\_IM_0(p_{xy})$ associée à ce pixel $p_{xy}$ dans la première image $IM_0$ :

$$\Delta IL\_IM_{i\text{-}0}(p_{xy}) = IL\_IM_i(p_{xy}) - IL\_IM_0(p_{xy})$$

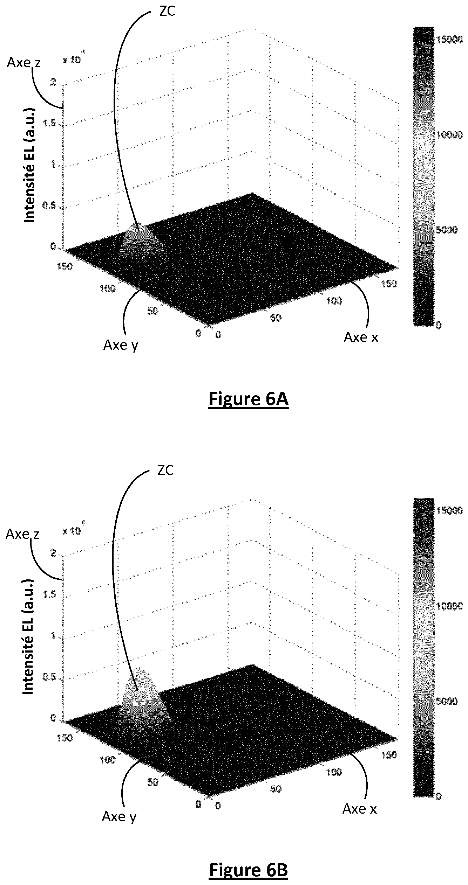

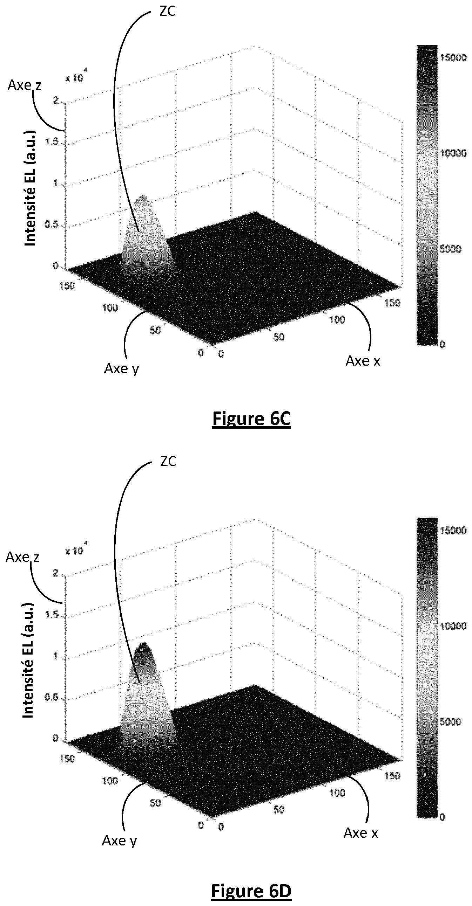

Sur les figures 6A à 6E, on a représenté les images différentielles résultant de la soustraction de la première image $IM_0$, acquise à l'instant T0, à chacune des images ultérieurement acquises à T1, T2, T3, T4, T5, T6 ou T7. Chacune des figures 6A à 6E fait apparaître une zone en relief correspondant à un pic d'intensité d'électroluminescence, dans le plan (x,y) de la cellule. Dans l'exemple représenté sur les figures, cette zone en relief est sensiblement centrée autour du point de coordonnées (25,125) dans le plan (x,y) de la cellule. Plus le décalage temporel entre la première image $IM_0$ et la deuxième image $IM_i$ est important, plus ce pic d'intensité est important. Ce pic d'intensité correspond à une zone chaude de la cellule et révèle un défaut de transfert thermique.

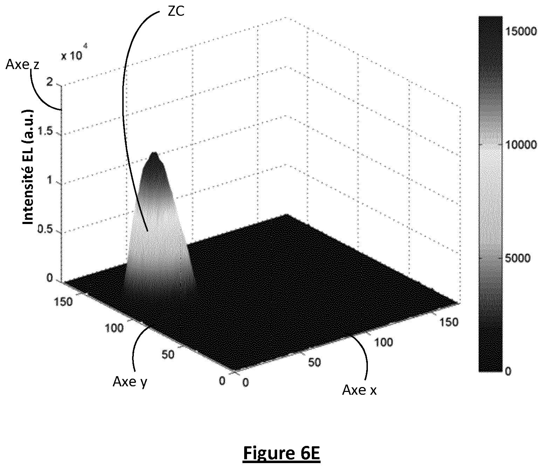

Supposons que la deuxième image acquise est l'image $IM_7$. Dans ce cas, l'image différentielle obtenue à l'issue de l'étape S4, notée $IM_{7\text{-}0}$, est celle représentée sur la figure 6E. Le pic d'intensité d'électroluminescence s'élève jusqu'à environ 1 a.u., où « a.u. » désigne une unité arbitraire permettant de représenter sur les graphes des valeurs d'intensité d'électroluminescence, qui sont faciles à comprendre et à comparer, sans aucune importance sur la quantité correspondante à l'unité.

L'étape de traitement d'image S4 est exécutée par le module de traitement d'image 7, sous contrôle du dispositif de commande E3.

Lors d'une étape S5, on détermine si l'image différentielle $IM_{7\text{-}0}$ déterminée lors de l'étape S4 contient des pixels ayant une intensité (différentiel d'électroluminescence) supérieure à un seuil prédéfini TSH_IL. Par exemple, ce seuil TSH_IL est fixé à 0.2 a.u. (soit une valeur cinq fois plus petite que la valeur maximale normalisée d'intensité). L'étape S5 permet d'identifier un ensemble de pixels voisins d'intensité supérieure au seuil TSH_IL dans l'image différentielle $IM_{7\text{-}0}$, correspondant à la zone en relief sur la figure 6E. Comme précédemment indiqué, cette zone en relief « ZC » correspond à une zone chaude de la cellule 1.

Lors d'une étape S6, on localise ici le défaut de dissipation thermique DT au niveau de l'interface entre la cellule 1 et le substrat 2, qui est révélé par la zone chaude ZC détectée lors de l'étape S5.

Les étapes S5 et S6 constituent une étape de détection d'un ou plusieurs éventuel(s) défaut(s) dans l'interface d'assemblage par analyse des données déterminées relatives à la différence entre deux images d'électroluminescence de la cellule, ici $IM_0$ et $IM_7$, décalées dans le temps et prises pendant la phase d'état thermique transitoire de la cellule. Elles sont exécutées par le module de détection 8, sous contrôle du dispositif de commande E3.

Dans un deuxième mode de réalisation, la deuxième image $IM_{final}$ est acquise postérieurement à la phase d'état thermique transitoire de la cellule, durant une phase d'état thermique stable de la cellule (c'est-à-dire une fois que la température en chaque point de la cellule s'est stabilisée). Selon l'instant d'acquisition de la deuxième image, notamment si elle est acquise tardivement, l'intensité d'électroluminescence moyenne ou de fond de la deuxième image est augmentée car la température moyenne de la cellule est aussi augmentée. Dans ce cas, on détermine si l'image différentielle $IM_{final-0}$ (soit $IM_{final}$ - $IM_0$) déterminée lors de l'étape S4 contient des pixels ayant une intensité (c'est-à-dire un différentiel d'électroluminescence) supérieure au seuil prédéfini TSH_IL augmenté du niveau de fond de l'image différentielle $IM_{final-0}$.

**Revendications**

1. Procédé de contrôle de la qualité d'un dispositif photovoltaïque comprenant une cellule photovoltaïque (1) assemblée à un substrat (2) par l'intermédiaire d'une interface (99) d'assemblage, comprenant les étapes suivantes :

   • injection (S0) d'un courant électrique ($I_{ctrl}$) à travers la cellule photovoltaïque (1) ;
   • acquisition (S2) d'une première image d'électroluminescence (IMo) de la cellule (1) sous l'effet du courant injecté ($I_{ctrl}$) ;

   **caractérisé en ce que** la première image d'électroluminescence ($IM_0$) est acquise durant une phase d'état thermique transitoire de la cellule (1), et **en ce qu'**il comprend une étape (S3) d'acquisition d'une deuxième image d'électroluminescence ($IM_i$) de la cellule (1), décalée dans le temps par rapport à la première image d'électroluminescence ($IM_0$), une étape de traitement d'image (S4) lors de laquelle on détermine des données relatives à une différence entre les deux images ($IM_0$, $IM_i$).

2. Procédé selon la revendication précédente, **caractérisé en ce qu'**il comprend une étape (S5, S6) de détection d'au moins un défaut dans l'interface d'assemblage par analyse des données relatives à la différence entre les deux images.

3. Procédé selon la revendication 1 ou 2, **caractérisé en ce que** la deuxième image ($IM_i$) est acquise durant la phase d'état thermique transitoire.

4. Procédé selon la revendication 1 ou 2, **caractérisé en ce que** la deuxième image ($IM_i$) est acquise durant une phase d'état thermique stable de la cellule, postérieure à la phase d'état thermique transitoire.

5. Procédé selon l'une des revendications précédentes, **caractérisé en ce qu'**il comprend une étape (S4) de soustraction entre les deux images ($IM_i$, $IM_0$).

6. Procédé selon l'une des revendications précédentes, **caractérisé en ce qu'**on injecte à travers la cellule photovoltaïque (1) un courant électrique de contrôle ($I_{ctrl}$) initialement nul qui augmente jusqu'à une valeur de consigne prédéfinie ($I_0$) durant une phase initiale, puis demeure stable et égal à ladite valeur de consigne.

7. Procédé selon la revendication 5 ou 6, **caractérisé en ce que** la première image (IMo) est acquise après ladite phase initiale d'augmentation du courant ou **en ce que** la première image (IMo) est acquise alors que le courant électrique de contrôle est stabilisé à ladite valeur de consigne.

8. Procédé selon l'une des revendications précédentes, **caractérisé en ce que** le décalage temporel entre les deux images est d'au moins 20ms.

9. Dispositif de contrôle de la qualité d'un dispositif photovoltaïque comprenant une cellule photovoltaïque assemblée à un substrat par l'intermédiaire d'une interface d'assemblage, le dispositif de contrôle comprenant des moyens (E1, E2, E3) de mettre en œuvre le procédé de contrôle selon l'une des revendications 1 à 8.

**Patentansprüche**

1. Verfahren zur Kontrolle der Qualität einer Photovoltaikvorrichtung, die eine Photovoltaikzelle (1) umfasst, die über eine Montageschnittstelle (99) an einem Substrat (2) montiert ist, umfassend die folgenden Schritte:

   • Einleiten (S0) eines elektrischen Stroms ($I_{ctrl}$) durch die Photovoltaikzelle (1) hindurch;
   • Aufnehmen (S2) eines ersten Elektrolumines-

zenzbildes (IM$_0$) der Zelle (1) unter der Einwirkung des eingeleiteten Stroms (I$_{ctrl}$);

**dadurch gekennzeichnet, dass** das erste Elektrolumineszenzbild (IM$_0$) während einer Temperaturzustandsübergangsphase der Zelle (1) aufgenommen wird, und dadurch, dass es einen Schritt (S3) des Aufnehmens eines zweiten Elektrolumineszenzbildes (IM$_i$) der Zelle (1), das in Bezug auf das erste Elektrolumineszenzbild (IMo) zeitlich versetzt ist, und einen Bildbearbeitungsschritt (S4), bei dem Daten bezüglich eines Unterschieds zwischen den beiden Bildern (IM$_0$, IM$_i$) bestimmt werden, umfasst.

2. Verfahren nach dem vorhergehenden Anspruch, **dadurch gekennzeichnet, dass** es einen Schritt (S5, S6) des Detektierens mindestens eines Fehlers in der Montageschnittstelle durch Auswerten der Daten bezüglich des Unterschieds zwischen den beiden Bildern umfasst.

3. Verfahren nach Anspruch 1 oder 2, **dadurch gekennzeichnet, dass** das zweite Bild (IMi) während der Temperaturzustandsübergangsphase aufgenommen wird.

4. Verfahren nach Anspruch 1 oder 2, **dadurch gekennzeichnet, dass** das zweite Bild (IMi) während einer stabilen Temperaturzustandsphase der Zelle, nach der Temperaturzustandsübergangsphase, aufgenommen wird.

5. Verfahren nach einem der vorhergehenden Ansprüche, **dadurch gekennzeichnet, dass** es einen Schritt (S4) der Subtraktion zwischen den beiden Bildern (IM$_i$, IM$_0$) umfasst.

6. Verfahren nach einem der vorhergehenden Ansprüche, **dadurch gekennzeichnet, dass** durch die Photovoltaikzelle (1) hindurch ein elektrischer Kontrollstrom (I$_{ctrl}$) von anfänglich null eingeleitet wird, der während einer Anfangsphase bis zu einem vorgegebenen Sollwert (I$_0$) steigt, dann stabil und gleich dem Sollwert bleibt.

7. Verfahren nach Anspruch 5 oder 6, **dadurch gekennzeichnet, dass** erste Bild (IMo) nach der Stromanstiegsanfangsphase aufgenommen wird, oder dadurch, dass das erste Bild (IMo) aufgenommen wird, während sich der elektrische Kontrollstrom auf dem Sollwert stabilisiert hat.

8. Verfahren nach einem der vorhergehenden Ansprüche, **dadurch gekennzeichnet, dass** ein zeitlicher Versatz zwischen den beiden Bildern mindestens 20 ms beträgt.

9. Vorrichtung zur Kontrolle der Qualität einer Photovoltaikvorrichtung, die eine Photovoltaikzelle umfasst, die über eine Montageschnittstelle an einem Substrat montiert ist, wobei die Kontrollvorrichtung Einrichtungen (E1, E2, E3) zur Durchführung des Kontrollverfahrens nach einem der Ansprüche 1 bis 8 umfasst.

## Claims

1. Method for checking the quality of a photovoltaic device comprising a photovoltaic cell (1) assembled with a substrate (2) via an assembly interface (99), comprising the following steps:

   • injection (S0) of an electrical current (I$_{ctrl}$) through the photovoltaic cell (1);
   • acquisition (S2) of a first electroluminescence image (IM$_0$) of the cell (1) under the effect of the injected current (I$_{ctrl}$) ;

   **characterized in that** the first electroluminescence image (IM$_0$) is acquired during a transient thermal state phase of the cell (1), and **in that** it comprises a step (S3) of acquisition of a second electroluminescence image (IM$_i$) of the cell (1), offset in time relative to the first electroluminescence image (IM$_0$), and an image processing step (S4) during which data are determined relating to a difference between the two images (IM$_0$, IM$_i$).

2. Method according to the preceding claim, **characterized in that** it comprises a step (S5, S6) of detection of at least one fault in the assembly interface by analysis of the data relating to the difference between the two images.

3. Method according to Claim 1 or 2, **characterized in that** the second image (IM$_i$) is acquired during the transient thermal state phase.

4. Method according to Claim 1 or 2, **characterized in that** the second image (IM$_i$) is acquired during a stable thermal state phase of the cell, after the transient thermal state phase.

5. Method according to one of the preceding claims, **characterized in that** it comprises a step (S4) of subtraction between the two images (IM$_i$, IM$_0$).

6. Method according to one of the preceding claims, **characterized in that** the photovoltaic cell (1) has injected through it a control electrical current (I$_{ctrl}$) that is initially nil and which increases to a predefined setpoint value (I$_0$) during an initial phase, then remains stable and equal to said setpoint value.

7. Method according to Claim 5 or 6, **characterized in**

**that** the first image ($IM_0$) is acquired after said initial current increasing phase or **in that** the first image ($IM_0$) is acquired when the control electrical current is stabilized at said setpoint value.

8. Method according to one of the preceding claims, **characterized in that** the time offset between the two images is at least 20 ms.

9. Device for checking the quality of a photovoltaic device comprising a photovoltaic cell assembled with a substrate via an assembly interface, the checking device comprising means (E1, E2, E3) for implementing the checking method according to one of Claims 1 to 8.

$\lambda = 1750\,\mathrm{nm}$    $\lambda = 880\,\mathrm{nm}$    $\lambda = 680\,\mathrm{nm}$

C3

C2

C1

InGaP
jonction "Top"

InGaAs
jonction "Mid"

Ge
jonction "Bot"

1

**Figure 1**

1

2

3

99

**Figure 2**

**Figure 3**

$T_{stb\_elec}$ $I_{ctrl}$ $T_{stb\_th}$

**Figure 4A**

$I_0$

$I_{cell}$

**Figure 4B**

$I_0$

$temp_{cell}$

**Figure 4C**

**Figure 4D**

| Trame sombre | Trame 0 | Trame 1 | Trame 2 | ... | Trame N |
|---|---|---|---|---|---|

*Integration time*

Ton    T0    T1    TN

**Figure 5A**

**Figure 5B**

**Figure 5C**

**Figure 6A**

**Figure 6B**

**Figure 6C**

**Figure 6D**

**Figure 6E**

**Figure 7**

**Figure 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2421052 A